# EUROPEAN PATENT SPECIFICATION

(11) **EP 3 084 348 B1**
(45) Date of publication and mention of the grant of the patent: **15.03.2017**
(21) Application number: 14830592.3
(22) Date of filing: 04.12.2014
(51) Int. Cl.: G01B 11/27, G01B 11/275

(54) **APPARATUS AND METHOD FOR DIAGNOSTIC ASSESSMENT OF THE SET-UP OF A VEHICLE THROUGH TRAJECTORY ESTIMATION**
VORRICHTUNG UND VERFAHREN ZUR DIAGNOSTISCHEN BEURTEILUNG DES AUFBAUS EINER FAHRZEUGES ÜBER FLUGBAHNSCHÄTZUNG
APPAREIL ET PROCÉDÉ PERMETTANT UNE ÉVALUATION DE DIAGNOSTIC DU RÉGLAGE D'UN VÉHICULE

(30) Priority: 19.12.2013 IT BO20130697
(43) Date of publication of application: 26.10.2016
(73) Proprietor: CORGHI S.p.A., 42015 Correggio (RE) (IT)
(72) Inventor: CORGHI, Giulio, I-42015 Correggio (Reggio Emilia) (IT)
(74) Representative: Conti, Marco
(86) International application number: PCT/IB2014/066578
(87) International publication number: WO 2015/092594

(56) References cited:
- EP-A1- 2 302 318
- EP-A2- 0 895 056
- WO-A1-2009/056392
- US-B1- 6 219 134

## Description

### Technical field

This invention relates to an apparatus and a method for the diagnostic assessment of the set-up of a vehicle equipped with at least four wheels having tyres coupled to respective rims.

### Background art

The invention relates to the technical sector of equipment used by tyre repairers to carry out checking and maintenance operations on the wheels of the vehicle and on the set-up of the vehicle in general.

Regarding detection of the set-up of a vehicle and in particular of a motor car, it is known, for example from patent documents US4745469, US5978077A1, US6397164, US6710866B1, US8096057B2, US8418543B2 or US8522609B2, that the motor car is positioned on tracks, with the wheels resting on resting platforms, and images of the wheels are detected using optical detection means. The data of said images is used to derive, by means of mathematical algorithms, the characteristic angles of the wheels, defining the vehicle set-up.

From patent documents EP0895056A2, WO2009/056392A1, EP2302318A1, US6219134B1, US20130188839A1, WO2012016813A1 and EP2601503 it is known that images of the moving vehicle are acquired, for deriving diagnostic indications about the vehicle suspensions. From patent document US8127599B2 a system for measuring the chassis of the vehicle is known, which involves measuring the vehicle wheel rims using the same pair of cameras, in two successive stages, by moving the vehicle from a first position (in which its front wheels are aligned with the cameras) to a second operating position (in which the rear wheels are aligned with the cameras). That solution is more economical than those previously mentioned, because it uses only two cameras, but it has the disadvantage of requiring very precise alignment between the wheel rims and the cameras.

In any case, all of the above-mentioned solutions are limited to calculating the vehicle set-up and are not able to provide additional, more broad-spectrum diagnostic information.

In light of this, it should be noticed that, faced with unwanted behaviour of the vehicle on the road, there are other possible causes, as well as an incorrect set-up, such as tyre run-out or conicity, incorrect inflation pressure, inflation pressure which is different from one wheel to another or steering play.

Therefore, detection of the characteristic angles of the vehicle gives the tyre repairer only one of the indicators needed for an overall assessment of the vehicle and to plan consequent action to be taken on the vehicle. That is a limitation for the above-mentioned prior art apparatuses.

### Disclosure of the invention

The aim of this invention is to provide an apparatus and a method for diagnostic assessment of the set-up of a vehicle equipped with at least four wheels having tyres coupled to respective rims which overcome the above-mentioned disadvantages of the prior art.

In particular, the aim of this invention is to provide an apparatus and a method for diagnostic assessment of the set-up of a vehicle able to provide the tyre repairer with diagnostic indications particularly useful for planning action on the vehicle.

A further aim of this invention is to provide an apparatus and a method for diagnostic assessment of the set-up of a vehicle which is particularly rapid and easy to carry out.

These aims are fully achieved by the apparatus and by the method according to this invention, as characterised in the appended claims.

In particular, the apparatus according to the invention is an apparatus for diagnostic assessment of the set-up of a vehicle equipped with at least four wheels having tyres coupled to respective rims.

The apparatus comprises two contact tracks for the vehicle tyres, positioned parallel with one another and angled in a longitudinal direction. Said tracks may be formed by an auto lift, or by rails positioned on the ground, or they may be coloured lines drawn on the floor, or may take another form. What is important is that the tracks form courses for a movement of the vehicle by rolling of the wheels of the vehicle on the tracks.

The tracks have two corresponding stretches. Said stretches define spatial references. The stretches are transversally aligned along the tracks, so that they simultaneously have placed on top of them the wheels of a pair of wheels of the vehicle on the same axle (front or rear).

The apparatus also comprises a first and a second optical measuring device. Such optical measuring devices are positioned outside the tracks, near to said (corresponding) stretches. The optical measuring devices are positioned on opposite sides of the tracks and oriented towards the tracks, for detecting image information of a first pair of wheels (in particular the front wheels) resting on the tracks in said stretches (or near to them), in a vehicle first operating position.

The optical measuring devices are positioned on opposite sides of the vehicle and substantially aligned with each other transversally to the longitudinal direction of the tracks.

Preferably, the apparatus also comprises at least one platform positioned on one of said stretches of the tracks, on top of which a wheel of the vehicle can be placed (for example when the vehicle is in the first operating position).

Preferably, the apparatus has two platforms, one for each track, which are positioned in said stretches and therefore aligned along an axis transversal (orthogonal) to the tracks. In that way, in the first operating position, the front wheels of the vehicle simultaneously rest on the platforms.

The apparatus also comprises a processing unit programmed for processing the image information for calculating a position in space of said wheels of the vehicle.

The processing unit has access to a database containing technical data of a plurality of types of vehicles and is programmed to set the type of vehicle being assessed.

Moreover, the processing unit comprises a memory containing a model of operation of a vehicle on the road. That model defines a plurality of model parameters. The model also comprises setting parameters, which are set depending on the type of vehicle set.

Preferably, the model comprises parameters relating to the wheels and/or tyres used on the vehicle. Even more preferably, the mathematical model may comprise other information including: the type of suspensions used on the vehicle and a set of parameters associated with it, geometric data and data about distribution of the forces on the chassis (the list is provided by way of example only, and is not necessarily exhaustive).

Moreover, preferably the model is designed to consider a type of road surface on which the vehicle moves, in particular the platform on which the vehicle moves during the measuring step and/or the forces in play during a step of acceleration, deceleration and direction change.

The processing unit is programmed to calculate, depending on the type of vehicle set, on the position detected for said pair of wheels and on the model parameters, an ideal trajectory of the vehicle during a movement from the first operating position to a second operating position, in which a wheel of a second pair of wheels of the vehicle rests on the platform.

Moreover, the processing unit is programmed to calculate an actual trajectory followed by the vehicle during a movement from the first operating position to the second operating position, depending on the type of vehicle, on the position detected for the wheels of said first pair and on further image information detected for at least one predetermined portion of the vehicle, at least when it is in the second operating position.

Moreover, the processing unit is programmed to derive diagnostic indications relating to the vehicle set-up, depending on a deviation of the actual trajectory relative to the ideal trajectory.

In fact, the calculation of the trajectory of the vehicle for a movement having known length provides information equivalent to an actual test of the vehicle on the road.

In light of this, the comparison of an actual behaviour of the vehicle and the behaviour which the vehicle would have displayed ideally, from the model, based on vehicle technical data, is particularly effective and significant from a diagnostic viewpoint, because it provides a guide for analysing the causes which produced said actual behaviour.

In actual fact, the apparatus allows a preliminary check of the vehicle set-up. The non-ideal behaviour of the vehicle, in general, is the result of various concomitant causes: in addition to a possible incorrect set-up, tyre run-out, tyre conicity, steering play, tyre inflation pressure or other causes. Faced with a non-ideal behaviour detected, the apparatus allows the identification of at least one of these causes and provides the operator with indications about what subsequent action must be taken.

In light of this, the apparatus according to the invention is able to provide a concise and overall indication about a possible defect in the behaviour of the vehicle on the road, with a guiding indication about the correlation between the set-up and said defect in the behaviour of the vehicle on the road. That provides a valid aid to the tyre repairer for planning his actions. Regarding said further image information detected for at least one predetermined portion of the vehicle, the following should be noticed.

Preferably, the predetermined portion of the vehicle is a part of the bodywork of the vehicle, for example the registration plate (rear or front), one or more headlights, one or more rear-view mirrors or any other element easily recognisable and present on all vehicles.

Alternatively (or in addition), a predetermined target or any other easily identifiable additional element is applied to the vehicle, for example using a magnet. Said target is designed to facilitate a detection by optical detection means (according to a substantially known technique).

Preferably, said further image information is detected in at least one further position of the vehicle, in addition to the first operating position. In particular, said further image information is detected (at least) in the first operating position and in the second operating position.

Preferably, the apparatus is configured for detecting said further image information relating to said at least one predetermined portion of the vehicle; at least when the vehicle is in the first operating position and in the second operating position. Said further image information relating to said at least one predetermined portion of the vehicle can be detected, for example, by one (or both) of said first and second optical measuring device.

Moreover, it should be noticed that, preferably, the apparatus comprises a further optical measuring device (in addition to said first and second optical measuring devices positioned transversally to the tracks at the sides of them), for detecting said further image information. Preferably, said further optical measuring device comprises a video camera (or stills camera) positioned at a distance from the tracks which is greater than said first and second optical vision device, for forming a quite wide field of vision including at least a portion of the vehicle both when the vehicle is in the first operating position and when the vehicle is in the second operating position.

In other words, said further optical measuring device is positioned quite far from the tracks so as to keep in frame (in its field of vision or tracking) the same portion of the vehicle (that is to say, said at least one predetermined portion of the vehicle) during the movement of the vehicle from the first to the second operating position.

Therefore, preferably, said further image information is preferably detected both when the vehicle is in the first operating position and when it is in the second operating position.

Preferably, said further optical measuring device is a video camera controlled for detecting a sequence of images one after another relating to said at least one predetermined portion of the vehicle, in a sequence of corresponding positions of the vehicle between the first and second operating positions of the vehicle.

In that way, the video camera is designed to detect a profile of images representative of the trajectory followed by the vehicle during its movement from the first to the second operating position.

According to a possible alternative embodiment, said first and second optical detection units could also be used for detecting said further image information.

In this case, the further image information comprises (or is) image information of the wheels of a second pair of wheels (for example, the rear wheels of the vehicle).

In this case, the processing unit is programmed to process said image information for calculating a position in space of both of said pairs of wheels of the vehicle. Moreover, the processing unit is programmed for calculating the actual trajectory followed by the vehicle during a movement from the first to the second operating position, depending on the position detected for the wheels of the first pair, with the vehicle in the first operating position, and depending on the position detected for the wheels of the second pair, with the vehicle in the second operating position (as well as depending on the type of vehicle).

It should be noticed that the invention also provides a method for diagnostic assessment of the set-up of a vehicle equipped with at least four wheels having tyres coupled to respective rims.

The method comprises the following steps.

During a positioning step, the vehicle is brought into a first operating position, in which the wheels (at least the front wheels) rest on said stretches of the tracks (in particular on the platforms, if the apparatus is provided with platforms).

It should be noticed that the first operating position is not necessarily maintained with the vehicle stationary. In fact, the vehicle reaches said first operating position with the wheels moving and goes beyond said position as it continues moving, without a proper stop of the rolling of the wheels when the wheels are on said stretches of the tracks. Alternatively, operatively, it is also possible to stop and hold the vehicle in the first position for a time interval.

A detection step comprises the detection of image information of a first pair of wheels (the front ones) positioned on opposite sides of the vehicle and transversally aligned (that is to say, the wheels of the front axle of the vehicle), when the vehicle is in the first operating position, by means of said first and second optical measuring devices which are positioned on opposite sides relative to the tracks and substantially oriented towards one another.

Said image information is then processed, for calculating a position in space of the wheels of said first pair of wheels of the vehicle.

From the first operating position, the vehicle is moved into a second operating position (keeping the wheels on the tracks, or at least aligned with them). In the second operating position the wheels of a second pair of wheels of the vehicle (that is to say, the wheels of the rear axle of the vehicle) are on said stretches of the tracks (if there is at least one platform, at least one corresponding wheel rests on said platform).

Similarly to what occurs for the first operating position, in the second operating position too there is no need for the vehicle to be stationary. In other words, it is preferable but not essential that in the second operating position the vehicle is stopped for a predetermined time interval. Moreover, further image information is detected relating to at least one predetermined portion of the vehicle, at least when it is in the second operating position.

For example, said predetermined portion of the vehicle is the registration plate or another easily identifiable part, or it is a reference target fixed to the vehicle.

Preferably, images of said predetermined portion of the vehicle are detected not just when it is in the second operating position, but also when it is in the first operating position. More preferably, a sequence of images of said predetermined portion of the vehicle is detected, plotting the movement of said predetermined portion of the vehicle during the movement of the vehicle itself from the first to the second operating position.

According to another possible solution, said further image information of corresponding predetermined portions of the vehicle could be images detected for the wheels of the rear axle of the vehicle, when the vehicle is in the second operating position.

The method also comprises selection of a type of vehicle from a database and setting of said selected type in the processing unit.

Then there is a step of calculating an ideal trajectory of the vehicle, during the vehicle movement from the first to the second operating position. Said calculation is carried out depending on the type of vehicle set, the position detected for said first pair of wheels, said further image information and the model of operation of a vehicle on the road (the mathematical model contained in the memory of the processing unit).

Said ideal trajectory is the trajectory that the vehicle would follow from the first to the second operating position in ideal conditions (for example in terms of set-up, run-out, conicity, inflation pressure, steering play).

It should be noticed that, preferably, before moving the vehicle from the first to the second operating position, the vehicle steering is locked (by acting on the vehicle steering wheel) in a predetermined position. In particular, it is locked in a forward travel direction (with null steering angle). The vehicle steering is then kept locked (again acting on the steering wheel) in that predetermined position during the movement of the vehicle from the first to the second operating position.

The processing unit also calculates an actual trajectory followed by the vehicle during the movement from the first to the second operating position.

That calculation of the actual trajectory takes place depending on the type of vehicle, the position detected for the wheels of said first pair and said further image information.

In general, the actual trajectory differs from the actual trajectory (since ideal set-up, and/or run-out, and/or steering play, and/or conicity, and/or inflation pressure do not exist; said list being provided by way of example only, without necessarily being exhaustive).

In light of this, according to the invention, there is a step of deriving diagnostic indications relating to the vehicle (in general to the set-up of the vehicle, but not just to the set-up).

Said deriving of diagnostic indications relating to the vehicle is carried out depending on a deviation of said actual trajectory relative to said ideal trajectory.

For detecting image information of the wheels, the following steps are performed.

Detection of the presence of at least one of said wheels near to a corresponding optical measuring device. This is preferably done using a position detector.

Alternatively, the presence of at least one of the wheels may be determined by processing one or more images acquired by the optical measuring device.

The rim of the wheel to be detected is lit up using a beam of light with predetermined intensity. Preferably, the light is infrared and has a wavelength such that it can be detected by the vision system.

A 3D image is preferably generated of the wheel to be detected, using a pair of video cameras in a stereo configuration, positioned close to the wheel. Alternatively, it is also possible to use just one video camera, operating in conjunction with structured light projectors calibrated relative to the video camera.

Preferably, there is a step of data acquisition from a control unit of the vehicle and/or from electronic components (chips) associated with the wheels of the vehicle. Said data is transferred to the processing unit, designed to derive diagnostic indications. The data transfer may take place via cable or wirelessly.

Concerning said diagnostic indications, it should be noticed that, for example, said information can be used to obtain the inflation pressure of the wheels and consider that during the subsequent processing. In addition to this data item useful for the processing which is the subject matter of the patent, there may also be other data (e.g.: errors present on the vehicle electronic control unit) useful for obtaining information about the state of the vehicle during a preliminary check step.

It should be noticed that the apparatus according to this invention is designed to interact with at least one wheel service device (for example a balancing machine, and/or a tyre changer). Such machines are designed for calculating parameters representative of a non-ideal behaviour of the wheel (that is to say, not uniform during the rolling of the wheel), for example run-out, conicity or wheel unbalance.

Therefore, said at least one wheel service device, together with the apparatus according to this invention, forms a diagnostic system.

In light of this, the processing unit (of the diagnostic system, that is to say, of the diagnostic apparatus) is programmed to derive diagnostic indications relating to the set-up of the vehicle, depending on a deviation of said actual trajectory relative to said ideal trajectory and depending on the run-out parameters calculated by the wheel service device for the wheels of the vehicle.

In light of this, it should be noticed that, since said deviation of the actual trajectory relative to the ideal trajectory is the result of several concomitant causes including the set-up of the vehicle, steering play and run-out of the wheels, the fact that the system knows the run-out and/or the conicity and/or the inflation pressure of the wheels (from a previous measurement taken on a wheel service device or detected by the system for acquisition of information from the vehicle electronic control unit) advantageously allows a particularly effective assessment of the set-up of the vehicle to be inferred.

### Brief description of drawings

This and other features of the invention will become more apparent from the following detailed description of a preferred, non-limiting example embodiment of it, with reference to the accompanying drawings, in which:

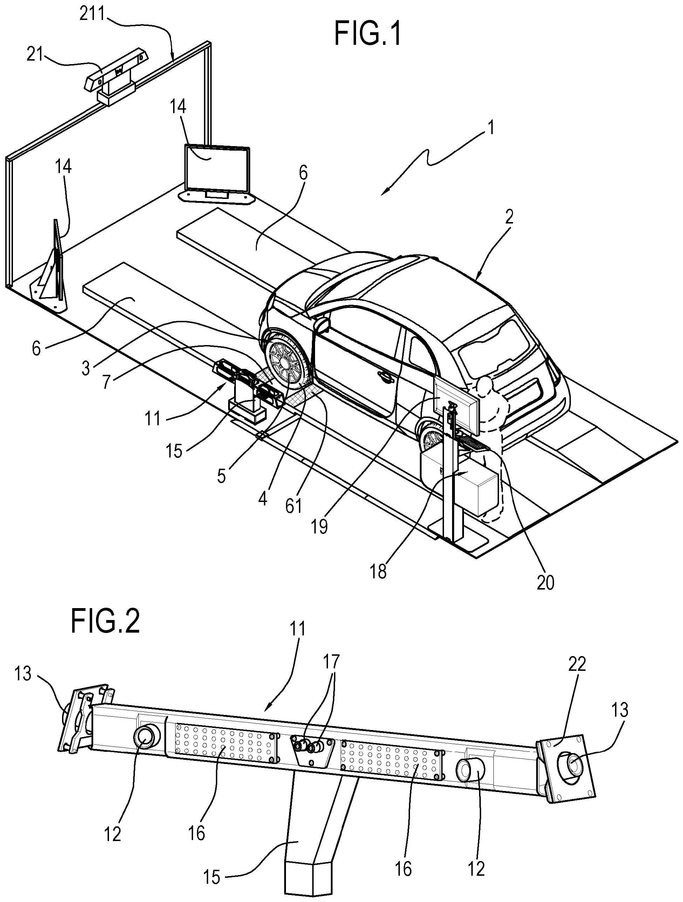

- Figure 1 is a perspective view of an apparatus according to this invention;
- Figure 2 is a detail of the apparatus of Figure 1;

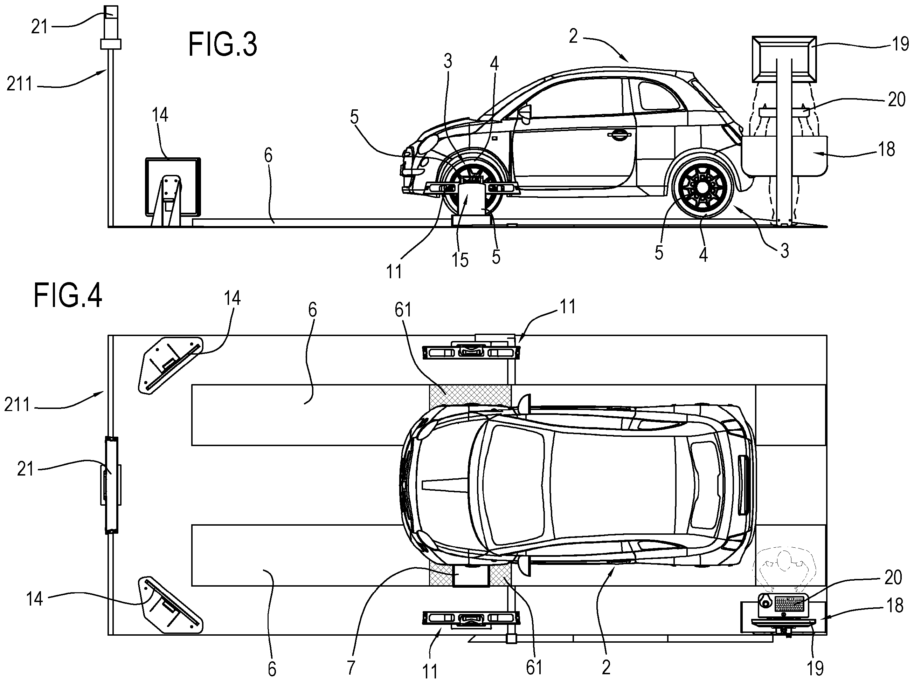

- Figure 3 is a side view of the apparatus of Figure 1;
- Figure 4 is a top view of the apparatus of Figure 1;

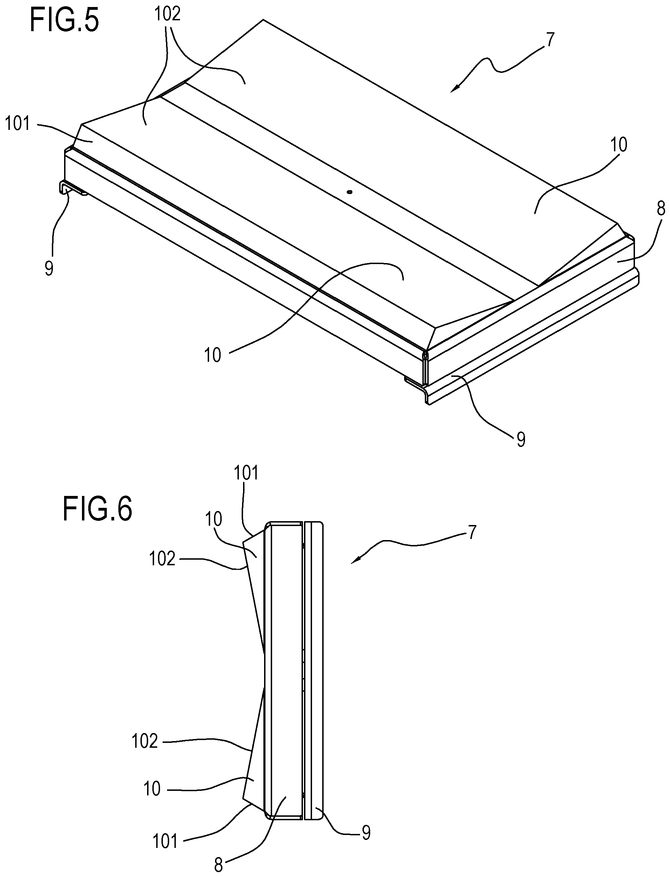

- Figure 5 is a perspective view of another detail of an embodiment of an apparatus according to this invention;
- Figure 6 is a side view of the detail of figure 5.

### Detailed description of preferred embodiments of the invention

The numeral 1 in the accompanying drawings denotes an apparatus for diagnostic assessment of the set-up of a vehicle 2.

The vehicle 2 is a vehicle equipped with at least four wheels 3. Each of the wheels 3 has a tyre 4 coupled to a corresponding rim 5.

The apparatus comprises two contact tracks 6 for the tyres 4 of the vehicle 2. The tracks 6 are positioned parallel with one another and oriented in a longitudinal direction.

The tracks 6 define respective stretches 61. Said stretches 61 of the tracks 6 are substantially aligned along a direction transversal (perpendicular) to the longitudinal direction of extension of the tracks 6.

Preferably (but not necessarily), positioned on at least one of said stretches 61 of the tracks 6 there is a platform 7 designed so that a wheel 3 of the vehicle 2 can be placed on top of it.

Preferably, the platform 7 is free to move along a transversal perpendicular to said longitudinal direction. That allows the discharge of the tensions of the wheel 3 of the vehicle resting on it.

Preferably, the platform 7 has a base 8 movably coupled to resting elements 9. The resting elements 9 rest on the ground or on the track 6. In particular, the base 8 is floating relative to its resting elements 9, so that it can perform at least said transversal movements.

Preferably, the platform 7 has two projections 10 forming surfaces for contact with the tyres 4 of the vehicle 2. Said projections 10 are fixed to the top of the base 8. Said projections are positioned transversally to the longitudinal direction and extending upwards, to form a seat for the tyre 4 resting on the platform 7 and interposed between the projections 10.

Preferably, the seat is substantially "V"- or "U"-shaped.

That allows easy, precise positioning of the wheel 3 of the vehicle in a predetermined position.

Preferably, the projections are shaped in such a way that they have a triangular cross-section. In particular, each of the two projections of the platform 7 preferably has at least a first face 101 and a second face 102 facing upwards and on top of which the tyre 4 can be placed. Said faces 101 and 102 are set at an angle to one another and where they join they form an edge which points upwards. The first faces 101 are positioned at the ends of the platform 7, relative to a longitudinal direction of passage of the wheel 3 on the platform 7 by rolling. In contrast, the second faces 102 are consecutive and are positioned between the first faces 101. Relative to a horizontal plane (parallel with the floor), the first faces 101 are set at an angle (for example 50 - 90 degrees) which is greater than the angle of inclination of the second faces 102 relative to that same horizontal plane (around 5 - 20 degrees).

Preferably, the two projections 10 are longitudinally spaced (for example by 4 - 50 centimetres, more preferably 5 - 15 centimetres). Between the two projections 10 there is preferably a face parallel with said horizontal plane (for example formed by the base 8 of the platform 7).

Preferably, the apparatus 1 comprises two of said platforms 7. They are aligned along an axis transversal to said longitudinal direction and are positioned on corresponding stretches of the tracks 4, so that a pair of wheels of the vehicle 2 belonging to the same axle (for example, the front wheels 3, or the pair of wheels 3 of the rear axle of the vehicle 2) can be placed on top of them simultaneously.

Moreover, the apparatus 1 comprises at least a first and a second optical measuring device 11. Said first and second optical measuring devices 11 are positioned outside the tracks 6 on opposite sides and are oriented towards the tracks 6, near to said stretches 61.

Therefore, if there is said at least one platform, one of said first and second optical measuring devices 11 is positioned near to the platform 7. If the apparatus 1 has two platforms 7, both of said first and second optical measuring devices 11 are positioned near to corresponding platforms 7.

In that way, said first and second optical measuring devices 11 are designed to detect image information of a first pair of wheels 3 (coupled to the same axle of the vehicle 2), when the wheels are positioned on said stretches 61 of the tracks 6.

When the vehicle has (at least) its front wheels 3 positioned on said stretches 61 of the tracks 6, it is in a first operating position.

Preferably, each of said optical measuring devices 11 comprises at least one video camera 12. More preferably, it comprises a pair of video cameras 12 in a stereo configuration, oriented towards the corresponding track 6, substantially at the height of a wheel 3.

Said video cameras 12 are designed to acquire images of a wheel 3 positioned on a corresponding track 6 in the stretch 61 (or on the platform 7, if one is present) near to them. The video cameras 12 are at a distance from one another, so that they view the wheel 3 through different optical paths.

Moreover, preferably, each of said optical measuring devices 11 comprises at least one field video camera 13, oriented to view a spatial reference target 14 positioned (that is to say, positionable) outside the tracks 6. Preferably, each of said optical measuring devices 11 also comprises a field illumination unit 22, positioned near to the field video camera 13 for projecting a beam of light in a direction of vision of the field video camera 13.

The reference targets 14 are used to calibrate the stereo video cameras 12, so as to generate a spatial reference system. At least one reference target 14 is used for that purpose. Preferably, for calibration, two targets 14 are used, which are placed in a known position relative to each other.

The field video camera 13 is used to determine the position of the measuring unit 11 (in particular of the video cameras 12) relative to a spatial reference system (absolute). In light of this, the position of the two reference targets 14 relative to each other is known (it is measured and could be measured by the same field video camera 13, put in suitable positions).

It should be noticed that, in an alternative embodiment not illustrated, the optical measuring devices 11 have no field video cameras 13. In that case, the video cameras 12 are used to determine the position of an object (that is to say, a target) relative to the corresponding optical measuring device 11. More precisely, a target is placed in an area in which it can be viewed by two video cameras 12 associated with two different optical measuring devices: by determining the position of the target relative to the two video cameras 12 it is possible to obtain the mutual position of the optical measuring devices 11. Alternatively, other video cameras are used (for example, the one of the further optical vision device 21). In that case, preferably, a target is associated with the video cameras 12 of the optical measuring device 11, said target having a known position relative to the video cameras (for example with a mechanical constraint): determining the spatial position of the target therefore allows identification of the position of the optical measuring device 11.

It should be noticed that, preferably, said optical measuring devices 11 are fixed to the ground in predetermined positions which are fixed relative to the tracks 6, by means of corresponding arms 15.

Therefore, it is enough to calibrate the stereo video cameras 12 just once upon installing the apparatus 1 in the workshop of the tyre repairer. After performing that calibration, the reference targets 14 can also be removed, to avoid taking up space.

Moreover, preferably, each of said optical measuring devices 11 comprises an illumination unit 16, designed to generate a beam of light intersecting the rim of the wheel 3 to be detected.

Said illumination unit 16 comprises, for example, a plurality of LEDs, or other lighting bodies.

Moreover, preferably, each of said optical measuring devices 11 comprises an element 17 designed to project a beam of structured of light on the wheel 3. Preferably, the structured light emitted by the projector element 17 is in the infrared spectrum. Even more preferably, the light emitted by the element 17, which strikes the wheel 3, is detected by the optical measuring system 11.

Moreover, preferably, each of said optical measuring devices 11 comprises a position detector element, designed to detect the presence of a wheel 3 on said corresponding track 6 (that is to say, on the corresponding stretch 61 of the track 6) near to it.

Said position detector element comprises, for example, a visible light emitter with related receiver. Preferably, the element can measure a distance of the object struck by its own beam of light emitted.

The apparatus 1 also comprises a processing unit 18. In the example illustrated, said processing unit 18 is a PC. But the processing unit 18 may be a remote server accessible via the Internet or other processing means.

Preferably, the apparatus 1 also comprises a display 19 connected to the processing unit 18.

Preferably, the apparatus 1 also comprises a keyboard 20 or another input peripheral connected to the processing unit 18.

Even more preferably, the display 19 and the keyboard 20 may be integrated in a single device, for example a touch-screen monitor. The processing unit 18 is connected to said first and second optical measuring devices 11 for receiving images (that is to say, image information) that they detect for the wheels 3 (in particular the outer lateral part of the wheels).

The processing unit 18 is programmed to process said image information, for each wheel 3 detected by the optical measuring devices 11, for calculating a position in space of the wheel 3 of the vehicle 2. In particular, a 3D image of the wheel is generated (according to a known technique), referring to said spatial reference system.

The apparatus 1 (in particular the processing unit 18) also comprises a memory containing a model of the operation of a vehicle on the road (in particular containing model parameters, defining the model). It should be noticed that the processing unit 18 also has access to a remote database containing said model.

The processing unit 18 also has access to a database containing the technical data of a plurality of types of vehicles 2.

Preferably, the processing unit 18 is programmed to present to the user on the display lists of brands of vehicle manufacturers and of models of vehicles for a selected manufacturer, to help the user to select the model of the vehicle being assessed.

Even more preferably, selection of the vehicle being assessed is performed by associating data obtained from the vehicle electronic control unit with data present in the database. In this way, the operator can avoid having to personally make any selections.

Once the selection has been made, by the user or automatically, the processing unit 18 recovers from the database the technical information relating to the vehicle (in particular, data useful for the mathematical model on the behaviour of the vehicle on the road) and sets it.

According to the invention, the processing unit 18 is programmed to calculate an ideal trajectory of the vehicle 2, depending on (at least) the type of vehicle set, on the position detected for said pair of wheels (the front wheels) and on the model parameters.

Moreover, the processing unit 18 is programmed to calculate an actual trajectory followed by the vehicle 2 during a movement from the first operating position to a second operating position, in which a wheel of a second pair of wheels 3 of the vehicle 2 (the rear wheels) rests on the platform 7.

The processing unit 18 is programmed to calculate the actual trajectory followed by the vehicle 2 during the movement from the first operating position to the second operating position, depending on (at least) the type of vehicle, on the position detected for the wheels of said first pair (the front wheels) and on further image information relating to at least one predetermined portion of the vehicle 2 and detected at least when the vehicle 2 is in the second operating position.

Moreover, preferably, the processing unit 18 is programmed to process the data of said ideal and actual trajectories calculated In particular, the processing unit 18 is programmed to derive diagnostic indications relating to the vehicle set-up ("vehicle set-up" here is meant in the widest sense and is not limited only to the characteristic angles of the vehicle wheels, as explained above), depending on a deviation of the actual trajectory determined (calculated) relative to the ideal trajectory calculated.

Regarding the detection of further image information relating to at least one predetermined portion of the vehicle 2, the following should be noticed.

Preferably, the apparatus 1 comprises a further optical measuring device 21, for detecting said further image information.

Preferably, said further optical measuring device 21 comprises (at least) one video camera. The optical measuring device may also comprise two video cameras in a stereo configuration. Preferably, said further optical measuring device 21 is positioned along a longitudinal trajectory defined by the tracks 6, preferably outside a space intended to be occupied by the vehicle 2 being assessed.

Preferably, said further optical measuring device 21 is associated with a supporting structure 211 raised off the ground at a height sufficient to allow a vehicle to pass beneath it.

Said further optical measuring device 21 is connected to the processing unit 18.

Preferably, said further optical measuring device 21 (or the processing unit 18 connected to it and designed to control it) is programmed to detect image information of said at least one predetermined portion of the vehicle 2 both when the vehicle 2 is in the first operating position, and when it is in the second operating position.

Preferably, said further optical measuring device 21 is programmed (that is to say, controlled) for detecting a sequence of images (in a time sequence) relating to said at least one predetermined portion of the vehicle 2, in a sequence of corresponding positions of the vehicle between the first and second operating positions of the vehicle 2. In that way, the further optical measuring device 21 is designed to plot the position in space adopted by said at least one predetermined portion of the vehicle 2 during the movement of the vehicle 2 between the first and second operating positions.

Said predetermined portion of the vehicle 2 is for example a vehicle 2 registration plate or a predetermined target, previously coupled (for example by a magnet) to the bodywork of the vehicle in a position in which it is visible to the further optical measuring device 21.

It should be noticed that the further optical measuring device 21 is also calibrated (by means of a suitable target, of the same type as the targets 14 or by means of one of said targets 14), relative to said absolute spatial reference system shared by said first and second optical measuring devices 11.

Preferably, the apparatus 1 also comprises a communication unit (not illustrated, of the known type) connected (or connectable) to the processing unit 18. Said communication unit is designed to communicate with an electronic control unit (ECU) of the vehicle 2, and/or with electronic components associated with the wheels 3 of the vehicle 2, for detecting data contained in them and transferring it to the processing unit 18.

Therefore, the invention also provides a method for diagnostic assessment (basically) relating to the set-up of the vehicle 2 equipped with at least four wheels 3 having tyres 4 coupled to respective rims 5.

Operatively, the method comprises the following steps.

The vehicle 2 is made to advance along the tracks 6 and is positioned in a first operating position, in which one of the front wheels 3 of the vehicle is positioned on said predetermined stretches 61 of the tracks 6 (if there is at least one platform 7, at least one of the wheels 3 rests on the platform 7).

Image information of a first pair of wheels 3 (the front wheels) is detected when the vehicle 2 is in the first operating position. Said detecting occurs using said one first and one second optical measuring devices 11.

Said image information relating to the first pair of wheels 3 is processed to derive a position in space of the wheels 3, relative to an absolute spatial reference system defined by a field step of the optical measuring devices 11 (said field may be implemented simultaneously with the measurement or just once, upon installing the apparatus 1).

The information relating to the wheels 3 determined in this way contains at least the coordinates of the centre of the wheel relative to an absolute spatial reference system and the orientation of the plane at a tangent to the wheel 3 (more precisely on the side of the wheel), generally expressed by means of a versor.

The steering wheel of the vehicle 2 is locked in a predetermined position, in particular with null steering angle. This is preferably done by means of a suitable tool usable by the tyre repairer. Said tool has an element for hooking to the steering wheel for locking its angular position and a steering wheel angle of rotation reader, designed to allow a reading of said angle (for example a spirit level or other means known in the tool sector).

The vehicle 2 is moved along the tracks 6 to the second operating position, in which one of the wheels 3 of a second pair of wheels 3 of the vehicle 2 (the rear wheels) is on the platform 7.

When the vehicle 2 is in the second operating position, said further image information is detected, relating to at least one predetermined portion of the vehicle 2.

It should be noticed that, preferably, the position of said at least one predetermined portion of the vehicle 2 during the movement of the vehicle 2 from the first to the second operating position is plotted (in this case, it is not essential, although it is preferable, to detect an image of said at least one predetermined portion of the vehicle 2 even in the second operating position).

The user of the apparatus 1 selects the type of vehicle 2 being checked. That data item is set in the processing unit 18. It should be noticed that said step may also be carried out at the start of the method, for example.

The processing unit 18 calculates an ideal trajectory of the vehicle 2, depending on the type of vehicle set, the position detected for said first pair of wheels 3 (preferably said further image information) and the model parameters defining a model of operation of the vehicle 2 on the road.

Moreover, the processing unit 18 calculates an actual trajectory followed by the vehicle 2 during the movement from the first to the second operating position, depending on the type of vehicle, the position detected for the wheels of said first pair and said further image information.

Moreover, the processing unit 18 derives diagnostic indications relating to the vehicle 2 (in particular with reference to the set-up of the vehicle 2), depending on a deviation of said actual trajectory relative to said ideal trajectory.

Preferably, data is also acquired from an electronic control unit of the vehicle 2 and/or from electronic components associated with the wheels 3 of the vehicle 2, said data then being transferred to the processing unit 18 for deriving diagnostic indications. Preferably, said acquisition occurs when the vehicle 2 is in the first or in the second operating position.

## Claims

1. An apparatus (1) for diagnostic assessment of the set-up of a vehicle (2) equipped with at least four wheels (3) having tyres (4) coupled to respective rims (5), comprising:
- two contact tracks (6) for the tyres (4) of the vehicle (2), positioned parallel with one another and oriented in a longitudinal direction;
- at least a first and a second optical measuring device (11) positioned outside the tracks (6) on opposite sides, near to corresponding stretches of the tracks (6) and oriented towards said stretches of the tracks (6), for detecting image information of a first pair of wheels (3) positioned on opposite sides of the vehicle (2) and aligned transversally relative to the longitudinal direction, on said stretches of the tracks (6) in a first operating position of the vehicle (2);
- a processing unit (18) programmed for processing said image information for calculating a position in space of said wheels (3) of the vehicle, **characterised in that** the processing unit (18)
has access to a database containing technical data of a plurality of types of vehicles and is programmed to set the type of vehicle (2) being assessed,
comprises a memory containing model parameters, defining a model of the operation of a vehicle on the road,
is programmed to calculate an ideal trajectory of the vehicle (2) being assessed, as a function of on the type of vehicle set, of the position detected for said first pair of wheels (3) and of the model parameters,
is programmed to calculate an actual trajectory followed by the vehicle (2) being assessed during a movement from the first operating position to a second operating position, in which the wheels (3) of a second pair of wheels (3) of the vehicle (2) are on said stretches of the tracks (6), as a function of the type of vehicle, of the position detected for the wheels (3) of said first pair and of further image information relating to at least one predetermined portion of the vehicle (2) and detected at least when it is in the second operating position;
is programmed to derive diagnostic indications relating to the set-up of the vehicle (2), as a function of a deviation of said actual trajectory calculated relative to said ideal trajectory calculated, wherein the apparatus (1) comprises a further optical measuring device (21) for detecting said further image information relating to said at least one predetermined portion of the vehicle, at least when the vehicle is in the first operating position and in the second operating position.

2. The apparatus (1) according to claim 1, wherein said further optical measuring device (21) is a video camera controlled for detecting one after another a sequence of images relating to said at least one predetermined portion of the vehicle, in a sequence of corresponding positions of the vehicle between the first and second operating positions.

3. The apparatus (1) according to any one of the preceding claims, comprising at least one platform (7) positioned on one of said stretches of the tracks (6), on top of which a wheel (3) of the vehicle (2) can be placed, wherein said at least one platform (7) is free to move along a transversal direction perpendicular to said longitudinal direction.

4. The apparatus (1) according to claim 3, wherein said at least one platform (7) has two projections positioned transversally to the longitudinal direction and extending upwards, to form a seat for a tyre (4) resting on the platform (7) and interposed between them, said seat being "V" or "U"-shaped.

5. The apparatus (1) according to claim 3 or 4, comprising two platforms (7), aligned along an axis transversal to said longitudinal direction and positioned on corresponding stretches of said tracks (6), so that the wheels (3) of said first pair of wheels (3) of the vehicle (2) can be simultaneously placed on top of them.

6. The apparatus (1) according to any one of the preceding claims, wherein each of said optical measuring devices (11) comprises:
- a pair of video cameras (12) in a stereo configuration, oriented for viewing a wheel (3) positioned on one of said stretches of a corresponding track (6);
- a field video camera (13), oriented to view a spatial reference target (14) positionable outside the tracks (6);
- an illumination unit (16), designed to generate a beam of light intersecting a rim (5) of the wheel (3) to be detected.

7. The apparatus (1) according to any one of the preceding claims, comprising a communication unit connected to the processing unit (18) and designed to communicate with an electronic control unit of the vehicle and/or with chips associated with the wheels of the vehicle, for detecting data contained in them and transferring it to the processing unit (18).

8. The apparatus (1) according to any one of the preceding claims, wherein said predetermined portion of the vehicle is a part of the bodywork of the vehicle, and/or a predetermined target applied to the vehicle.

9. A method for diagnostic assessment relating to the set-up of a vehicle (2) equipped with at least four wheels (3) having tyres (4) coupled to respective rims (5), comprising the following steps:
- positioning the vehicle (2) in a first operating position, with the wheels (2) on corresponding stretches of two tracks (6) positioned parallel with each other and oriented in a longitudinal direction;
- detecting image information of a first pair of wheels (3) positioned on opposite sides of the vehicle (2) and aligned transversally, being positioned on said stretches of the tracks (6), using at least a first and a second optical measuring device (11) positioned on opposite sides relative to the tracks (6) and oriented towards one another;
- processing said image information for calculating a position in space of the wheels (3) of said first pair of wheels (3) of the vehicle (2);
- moving the vehicle (2), keeping the wheels (3) on the tracks (6), to a second operating position, in which the wheels (3) of a second pair of wheels (3) of the vehicle (2) are on said stretches of the tracks (6);
- detecting further image information relating to at least one predetermined portion of the vehicle (2), at least when the vehicle is in the second operating position,
**characterised in that** it comprises the following steps:
- selecting a type of vehicle (2) from a database and setting of said selected type in a processing unit (18);
- calculating an ideal trajectory of the vehicle (2), depending at least on the type of vehicle set, the position detected for said first pair of wheels (3) and the model parameters defining a model of operation of a vehicle on the road;
- calculating an actual trajectory followed by the vehicle (2) during the movement from the first to the second operating position, as a function of the type of vehicle, of the position detected for the wheels (3) of said first pair and of said further image information;
- deriving diagnostic indications relating to the set-up of the vehicle (2), as a function of a deviation of said actual trajectory relative to said ideal trajectory,
wherein said further image information is detected by a further optical measuring device (21) and comprises image information relating to a predetermined portion of the vehicle (2), detected at least when it is in the first operating position and when it is in the second operating position.

10. The method according to claim 9, wherein said detection of further image information comprises detection one after another of a sequence of images relating to said at least one predetermined portion of the vehicle (2), in a sequence of corresponding positions of the vehicle (2) during the movement of the vehicle from the first to the second operating position.

11. The method according to any one of claims 9 to 10, wherein the steering of the vehicle is kept locked in a predetermined position, during said movement of the vehicle (2) from the first to the second operating position.

12. The method according to any one of claims 9 to 11, wherein detection of the image information of said wheels (3) comprises the following steps:
- detecting the presence of at least one of said wheels (3);
- lighting up of the wheel to be detected, using a beam of light with predetermined intensity;
- viewing, by means of a pair of video cameras (12) in a stereo configuration, of a wheel (3) positioned on a corresponding track (6) near to them.

13. The method according to any one of claims 9 to 12, comprising a step of acquiring data from an electronic control unit of the vehicle (2) and/or from chips associated with the wheels (3) of the vehicle (2), and of transferring of said data to a processing unit (18) for deriving diagnostic indications.

14. The method according to any one of claims 9 to 13, wherein said predetermined portion of the vehicle is a part of the bodywork of the vehicle, and/or a predetermined target applied to the vehicle.

15. A system for diagnostic assessment of a vehicle (2) equipped with at least four wheels (3) having tyres (4) coupled to respective rims (5), comprising at least one wheel service device, designed for calculating a non-ideal parameter of a wheel (3),
**characterised in that** it comprises an apparatus (1) according to any one of claims 1 to 8, wherein the processing unit (18) is programmed to derive diagnostic indications relating to the set-up of the vehicle (2), as a function of a deviation of said actual trajectory relative to said ideal trajectory and of the non-ideal parameter calculated by the wheel service device for the wheels (3) of the vehicle (2).

## Patentansprüche

1. Vorrichtung (1) zur diagnostischen Beurteilung der Fahrwerkseinstellung eines Fahrzeugs (2), das mit mindestens vier Rädern (3), aufweisend Reifen (4), die mit entsprechenden Naben (5) gekuppelt sind, ausgestattet ist, umfassend:
- zwei Kontaktspuren (6) für die Reifen (4) des Fahrzeugs (2), die parallel zueinander positioniert und in einer Längsrichtung ausgerichtet sind;
- mindestens eine erste und eine zweite optische Messeinrichtung (11), die außerhalb der Spuren (6) an entgegengesetzten Seiten in der Nähe entsprechender Teilstücke der Spuren (6) positioniert und in Richtung der Teilstücke der Spuren (6) ausgerichtet sind, um Bildinformationen eines ersten Paars von Rädern (3) zu erfassen, die an entgegengesetzten Seiten des Fahrzeugs (2) positioniert und quer zur Längsrichtung auf den Teilstücken der Spuren (6) in einer ersten Betriebsposition des Fahrzeugs (2) ausgerichtet sind;
- eine Verarbeitungseinheit (18), die programmiert ist, um die Bildinformationen zu verarbeiten, um eine räumliche Position der Räder (3) des Fahrzeugs zu kalkulieren,
**dadurch gekennzeichnet, dass** die Verarbeitungseinheit (18)
Zugriff auf eine Datenbank hat, die technische Daten einer Vielzahl an Fahrzeugtypen enthält, und programmiert ist, um den Typ des zu beurteilenden Fahrzeugs (2) festzulegen;
einen Speicher, enthaltend Modellparameter, umfasst, definierend ein Modell des Betriebs eines Fahrzeugs auf der Straße;
programmiert ist, um eine optimale Bahn des zu beurteilenden Fahrzeugs (2) zu kalkulieren, abhängig vom festgelegten Fahrzeugtyp, von der für das erste Paar von Rädern (3) erfassten Position und den Modellparametern;
programmiert ist, um eine vom zu beurteilenden Fahrzeug (2) verfolgte Ist-Bahn während einer Bewegung von der ersten Betriebsposition in eine zweite Betriebsposition zu kalkulieren, in der sich die Räder (3) eines zweiten Paars von Rädern (3) des Fahrzeugs (2) auf den Teilstücken der Spuren (6) befinden, abhängig vom Fahrzeugtyp, von der für die Räder (3) des ersten Paars erfassten Position und von weiteren Bildinformationen, die sich auf mindestens einen vorgegebenen Abschnitt des Fahrzeugs (2) beziehen und mindestens erfasst werden, wenn sich dieses in der zweiten Betriebsposition befindet;
programmiert ist, um diagnostische Angaben in Bezug auf die Fahrwerkseinstellung des Fahrzeugs (2) abhängig von einer Abweichung der Ist-Bahn, berechnet relativ zur optimalen kalkulierten Bahn, abzuleiten, wobei die Vorrichtung (1) eine weitere optische Messeinrichtung (21) zum Erfassen der weiteren Bildinformationen bezüglich des mindestens einen vorgegebenen Abschnitts des Fahrzeugs umfasst, zumindest wenn sich das Fahrzeug in der ersten Betriebsposition und in der zweiten Betriebsposition befindet.

2. Vorrichtung (1) nach Anspruch 1, wobei die weitere optische Messeinrichtung (21) eine Videokamera ist, die gesteuert wird, um nacheinander eine Sequenz von Bildern zu erfassen, die sich auf den mindestens einen vorgegebenen Fahrzeugabschnitt in einer Abfolge entsprechender Positionen des Fahrzeugs zwischen der ersten und der zweiten Betriebsposition beziehen.

3. Vorrichtung (1) nach einem der vorhergehenden Ansprüche, umfassend mindestens eine Plattform (7), die auf einem der Teilstücke der Spuren (6) positioniert ist, auf deren Oberseite ein Rad (3) des Fahrzeugs (2) platziert werden kann, wobei sich die mindestens eine Plattform (7) frei entlang einer Querrichtung bewegen kann, die senkrecht zur Längsrichtung verläuft.

4. Vorrichtung (1) nach Anspruch 3, wobei die mindestens eine Plattform (7) zwei Vorsprünge aufweist, die quer zur Längsrichtung angeordnet sind und sich nach oben erstrecken, um eine Aufnahme für einen Reifen (4) zu formen, die auf der Plattform (7) ruht und zwischen diesen eingesetzt ist, wobei diese Aufnahme eine "V"- oder "U"-Form aufweist.

5. Vorrichtung (1) nach Anspruch 3 oder 4, umfassend zwei Plattformen (7), die entlang einer Achse ausgerichtet sind, die quer zur Längsrichtung verläuft und auf entsprechenden Teilstücken der Spuren (6) positioniert ist, sodass die Räder (3) des ersten Paars von Rädern (3) des Fahrzeugs (2) gleichzeitig darauf platziert werden können.

6. Vorrichtung (1) nach einem der vorhergehenden Ansprüche, wobei eine jede der optischen Messeinrichtungen (11) umfasst:
- ein Paar Videokameras (12) in einer Stereokonfiguration, ausgerichtet, um ein Rad (3) zu betrachten, das auf einem der Teilstücke einer entsprechenden Spur (6) positioniert ist;
- eine Feldvideokamera (13), die ausgerichtet ist, um ein räumliches Referenzziel (14) zu betrachten, das außerhalb der Spuren (6) positioniert werden kann;
- eine Beleuchtungseinheit (16), die ausgestaltet ist, um einen Lichtstrahl zu erzeugen, der eine Nabe (5) des zu erfassenden Rads (3) schneidet.

7. Vorrichtung (1) nach einem der vorhergehenden Ansprüche, umfassend eine Kommunikationseinheit, die mit der Verarbeitungseinheit (18) verbunden und ausgelegt ist, um mit einer elektronischen Steuereinheit des Fahrzeugs und/oder mit Chips zu kommunizieren, verknüpft mit den Rädern des Fahrzeugs, um Daten zu erfassen, die darin enthalten sind, und diese an die Verarbeitungseinheit (18) zu übermitteln.

8. Vorrichtung (1) nach einem der vorhergehenden Ansprüche, wobei der vorgegebene Fahrzeugabschnitt Teil der Karosserie des Fahrzeugs ist und/oder ein vorgegebenes, am Fahrzeug angebrachtes Ziel.

9. Verfahren zur diagnostischen Beurteilung bezüglich der Fahrwerkseinstellung eines Fahrzeugs (2), das mit mindestens vier Rädern (3) ausgestattet ist, aufweisend Reifen (4), die mit entsprechenden Naben (5) gekuppelt sind, umfassend die folgenden Schritte:
- Positionieren des Fahrzeugs (2) in einer ersten Betriebsposition, wobei die Räder (2) auf entsprechenden Teilstücken der zwei Spuren (6) parallel zueinander und in eine Längsrichtung ausgerichtet positioniert werden;
- Erfassen von Bildinformationen eines ersten Paars von Rädern (3), positioniert auf entgegengesetzten Seiten des Fahrzeugs (2) und quer ausgerichtet, wobei diese auf den Teilstücken der Spuren (6) positioniert sind, unter Nutzung von mindestens einer ersten und einer zweiten Messeinrichtung (11), positioniert auf entgegengesetzten Seiten relativ zu den Spuren (6) und ausgerichtet zueinander;
- Verarbeiten der Bildinformationen, um eine räumliche Position der Räder (3) des ersten Paars von Rädern (3) des Fahrzeugs (2) zu berechnen;
- Bewegen des Fahrzeugs (2), wobei die Räder (3) auf den Spuren (6) bleiben, in eine zweite Betriebsposition, in der sich die Räder (3) eines zweiten Paars von Rädern (3) des Fahrzeugs (2) auf den Teilstücken der Spuren (6) befinden;
- Erfassen weiterer Bildinformationen bezüglich mindestens eines vorgegebenen Abschnitts des Fahrzeugs (2), zumindest wenn sich das Fahrzeug in der zweiten Betriebsposition befindet,
**dadurch gekennzeichnet, dass** es folgende Schritte umfasst:
- Auswählen eines Fahrzeugtyps (2) aus einer Datenbank und Festlegen des ausgewählten Fahrzeugtyps in einer Verarbeitungseinheit (18);
- Berechnen einer optimalen Bahn des Fahrzeugs (2), die mindestens vom festgelegten Fahrzeugtyp, der für das erste Paar von Rädern (3) erfassten Position und den Modellparametern, die ein Betriebsmodell eines Fahrzeugs auf der Straße definieren, abhängt;
- Berechnen einer vom Fahrzeug (2) während der Bewegung von der ersten in die zweite Betriebsposition verfolgten Bahn, abhängig vom Fahrzeugtyp, der für die Räder (3) des ersten Räderpaars erfassten Position und den weiteren Bildinformationen;
- Ableiten diagnostischer Angaben in Bezug auf die Fahrwerkseinstellung des Fahrzeugs (2), abhängig von einer Abweichung der Ist-Bahn relativ zur optimalen Bahn,
wobei die weiteren Bildinformationen von einer weiteren optischen Messeinrichtung (21) erfasst werden und Bildinformationen bezüglich eines vorgegebenen Abschnitts des Fahrzeugs (2) umfassen, die mindestens erfasst werden, wenn sich dieses in der ersten Betriebsposition befindet und wenn sich dieses in der zweiten Betriebsposition befindet.

10. Verfahren nach Anspruch 9, wobei das Erfassen von weiteren Bildinformationen das nacheinander erfolgende Erfassen einer Sequenz von Bildern umfasst, die sich auf mindestens einen vorgegebenen Abschnitt des Fahrzeugs (2) beziehen, in einer Abfolge entsprechender Positionen des Fahrzeugs (2) während der Bewegung des Fahrzeugs von der ersten in die zweite Betriebsposition.

11. Verfahren nach einem der Ansprüche 9 bis 10, wobei das Lenken des Fahrzeugs in einer vorgegebenen Position während der Bewegung des Fahrzeugs (2) von der ersten in die zweite Betriebsposition verriegelt gehalten wird.

12. Verfahren nach einem der Ansprüche 9 bis 11, wobei das Erfassen der Bildinformationen der Räder (3) die folgenden Schritte umfasst:
- Erfassen der Anwesenheit von mindestens einem der Räder (3);
- Beleuchten des zu erfassenden Rads mittels eines Lichtstrahls mit vorgegebener Lichtstärke;
- Betrachten mittels eines Paars von Videokameras (12) in einer Stereokonfiguration eines Rads (3), das auf einer entsprechenden Spur (6) in deren Nähe positioniert ist.

13. Verfahren nach einem der Ansprüche 9 bis 12, umfassend einen Schritt zum Erfassen von Daten aus einer elektronischen Steuereinheit des Fahrzeugs (2) und/oder von Chips, die mit den Rädern (3) des Fahrzeugs (2) verknüpft sind, und Übermitteln dieser Daten an eine Verarbeitungseinheit (18), um diagnostische Angaben abzuleiten.

14. Verfahren nach einem der Ansprüche 9 bis 13, wobei der vorgegebene Fahrzeugabschnitt Teil der Karosserie des Fahrzeugs ist und/oder ein vorgegebenes, am Fahrzeug angebrachtes Ziel.

15. System zur diagnostischen Beurteilung eines Fahrzeugs (2), das mit mindestens vier Rädern (3) ausgestattet ist, aufweisend Reifen (4), die mit entsprechenden Naben (5) gekuppelt sind, umfassend mindestens eine Radserviceeinrichtung, die ausgestaltet ist, um einen nicht optimalen Parameter eines Rads (3) zu berechnen,
**dadurch gekennzeichnet, dass** es eine Vorrichtung (1) nach einem der Ansprüche 1 bis 8 umfasst, wobei die Verarbeitungseinheit (18) programmiert ist, um diagnostische Angaben in Bezug auf die Fahrwerkseinstellung des Fahrzeugs (2) abhängig von einer Abweichung der Ist-Bahn von der optimalen Bahn und von dem nicht optimalen Parameter, der durch die Radserviceeinrichtung für die Räder (3) des Fahrzeugs (2) berechnet wurde, abzuleiten.

## Revendications

1. Appareil (1) permettant l'évaluation diagnostique du réglage d'un véhicule (2) équipé d'au moins quatre roues (3) comportant des pneus (4) couplés à des jantes (5) respectives, comprenant :
- deux voies de contact (6) pour les pneus (4) du véhicule (2) positionnées parallèlement l'une à l'autre et orientées dans une direction longitudinale ;
- au moins un premier et un second appareil de mesure optique (11) positionnés à l'extérieur des voies (6) sur des côtés opposés, près de portions correspondantes des voies (6) et orientés vers lesdites portions de voies (6), pour détecter des informations d'image d'une première paire de roues (3) positionnées sur des côtés opposés du véhicule (2) et alignées transversalement par rapport à la direction longitudinale sur lesdites portions des voies (6) dans une première position de fonctionnement du véhicule (2) ;
- une unité de traitement (18) programmée pour traiter lesdites informations d'image pour calculer une position dans l'espace desdites roues (3) du véhicule, **caractérisé en ce que** l'unité de traitement (18)
a accès à une base de données contenant les données techniques d'une pluralité de types de véhicules et est programmée pour configurer le type de véhicule (2) étant évalué,
comprend une mémoire contenant des paramètres de modèle définissant un modèle du fonctionnement d'un véhicule sur la route,
est programmée pour calculer une trajectoire idéale du véhicule (2) étant évalué en fonction du type de véhicule configuré, de la position détectée pour ladite première paire de roues (3) et des paramètres de modèle,
est programmée pour calculer une trajectoire réelle suivie par le véhicule (2) étant évalué lors d'un déplacement de la première position de fonctionnement à une seconde position de fonctionnement, dans laquelle les roues (3) d'une seconde paire de roues (3) du véhicule (2) sont sur lesdites portions des voies (6) en fonction du type de véhicule, de la position détectée pour les roues (3) de ladite première paire et des informations d'image supplémentaires relatives à au moins une partie prédéfinie du véhicule (2) et détectées au moins lorsqu'il se trouve au moins dans la seconde position de fonctionnement ;
est programmée pour déduire des indications diagnostiques relatives au réglage du véhicule (2) en fonction d'une déviation de ladite trajectoire réelle calculée par rapport à ladite trajectoire idéale calculée, dans lequel l'appareil (1) comprend un appareil de mesure optique (21) supplémentaire pour détecter lesdites informations d'image supplémentaires concernant ladite au moins une partie prédéfinie du véhicule, au moins lorsque le véhicule se trouve dans la première position de fonctionnement et dans la seconde position de fonctionnement.

2. Appareil (1) selon la revendication 1, dans lequel ledit appareil de mesure optique (21) supplémentaire est une caméra vidéo commandée pour détecter une succession d'images en séquence concernant ladite au moins une partie prédéfinie du véhicule, dans une séquence de positions correspondantes du véhicule entre les première et seconde positions de fonctionnement.

3. Appareil (1) selon l'une quelconque des revendications précédentes, comprenant au moins une plateforme (7) positionnée sur une desdites portions des voies (6) au dessus de laquelle une roue (3) du véhicule (2) peut être placée, dans lequel ladite au moins une plateforme (7) est libre de se déplacer le long d'une direction transversale perpendiculaire à ladite direction longitudinale.

4. Appareil (1) selon la revendication 3, dans lequel ladite au moins une plateforme (7) comporte deux saillies positionnées transversalement à la direction longitudinale et se prolongeant vers le haut pour former un siège pour un pneu (4) en appui sur la plateforme (7) et interposé entre celles-ci, ledit siège étant en « V » ou en « U ».

5. Appareil (1) selon les revendications 3 ou 4, comprenant deux plateformes (7) alignées le long d'un axe transversal à ladite direction longitudinale et positionnées sur des portions correspondantes desdites voies (6) de sorte que les roues (3) de ladite première paire de roues (3) du véhicule (2) peuvent être placées simultanément au dessus de celles-ci.

6. Appareil (1) selon l'une quelconque des revendications précédentes, dans lequel chacun desdits appareils de mesure optique (11) comprend .
- une paire de caméras vidéo (12), dans une configuration stéréo, orientées pour visualiser une roue (3) positionnée sur une desdites portions d'une voie correspondante (6) ;
- une caméra vidéo de champ (13) orientée pour visualiser une cible de référence spatiale (14) pouvant se positionner à l'extérieur des voies (6) ;
- un système d'éclairage (16) conçu pour générer un faisceau de lumière coupant une jante (5) de la roue (3) à détecter.

7. Appareil (1) selon l'une quelconque des revendications précédentes, comprenant une unité de communication reliée à l'unité de traitement (18) et conçue pour communiquer avec une unité de commande électronique du véhicule et/ou avec des puces associées aux roues du véhicule pour détecter les données contenues en elles et les transférer à l'unité de traitement (18).

8. Appareil (1) selon l'une quelconque des revendications précédentes, dans lequel ladite partie prédéfinie du véhicule est une partie de la carrosserie du véhicule et/ou une cible prédéfinie appliquée au véhicule.

9. Procédé d'évaluation diagnostique concernant le réglage d'un véhicule (2) équipé d'au moins quatre roues (3) comportant des pneus (4) couplés à des jantes (5) respectives, comprenant les étapes suivantes :
- positionner le véhicule (2) dans une première position de fonctionnement, avec les roues (2) sur des portions correspondantes de deux voies (6) positionnées parallèlement l'une à l'autre et orientées dans une direction longitudinale ;
- détecter des informations d'image d'une première paire de roues (3), positionnées sur des côtés opposés du véhicule (2) et alignées transversalement, étant positionnée sur lesdites portions des voies (6), en utilisant au moins un premier et un second appareil de mesure optique (11) positionnés sur des côtés opposés par rapport aux voies (6) et orientés l'un vers l'autre ;
- traiter lesdites informations d'image pour calculer une position dans l'espace des roues (3) de ladite première paire de roues (3) du véhicule (2) ;
- déplacer le véhicule (2), en maintenant les roues (3) sur les voies (6) dans une seconde position de fonctionnement, dans laquelle les roues (3) d'une seconde paire de roues (3) du véhicule (2) se trouvent sur lesdites portions des voies (6) ;
- détecter des informations d'image concernant au moins une partie prédéfinie du véhicule (2), au moins lorsque le véhicule se trouve dans la seconde position de fonctionnement,
**caractérisé en ce qu'**il comprend les étapes suivantes :
- sélectionner un type de véhicule (2) à partir d'une base de données et configurer ledit type sélectionné dans une unité de traitement (18) ;
- calculer une trajectoire idéale du véhicule (2) selon au moins le type de véhicule configuré, la position détectée pour ladite première paire de roues (3) et les paramètres de modèle définissant un modèle de fonctionnement d'un véhicule sur la route ;
- calculer une trajectoire réelle suivie par le véhicule (2) lors du déplacement de la première à la seconde position de fonctionnement en fonction du type de véhicule, de la position détectée pour les roues (3) de ladite première paire et desdites informations d'image supplémentaires ;
- déduire des indications diagnostiques relatives au réglage du véhicule (2) en fonction d'une déviation de ladite trajectoire réelle par rapport à ladite trajectoire idéale,
dans lequel lesdites informations d'image supplémentaires sont détectées par un appareil de mesure optique (21) supplémentaire et comprennent des informations d'image concernant une partie prédéfinie du véhicule (2) détectée au moins lorsqu'il se trouve dans la première position de fonctionnement et lorsqu'il se trouve dans la seconde position de fonctionnement.

10. Procédé selon la revendication 9, dans lequel ladite détection des informations d'image supplémentaires comprend la détection en succession d'une séquence d'images concernant ladite au moins une partie prédéfinie du véhicule (2), dans une séquence de positions correspondantes du véhicule (2) lors du déplacement du véhicule de la première à la seconde position de fonctionnement.

11. Procédé selon l'une quelconque des revendications de 9 à 10, dans lequel la direction du véhicule est maintenue bloquée dans une position prédéfinie lors dudit déplacement du véhicule (2) de la première à la seconde position de fonctionnement.

12. Procédé selon l'une quelconque des revendications de 9 à 11, dans lequel la détection des informations d'image desdites roues (3) comprend les étapes suivantes :
- détection de la présence d'au moins une desdites roues (3) ;
- éclairage de la roue à détecter en utilisant un faisceau de lumière d'une intensité prédéfinie ;
- visualisation, au moyen d'une paire de caméras vidéo (12) dans une configuration stéréo, d'une roue (3) positionnée sur une voie (6) correspondante proche de celles-ci.

13. Procédé selon l'une quelconque des revendications de 9 à 12, comprenant une étape d'acquisition des données à partir d'une unité de commande électronique du véhicule (2) et/ou de puces associées aux roues (3) du véhicule (2), et de transfert desdites données à une unité de traitement (18) pour déduire des indications diagnostiques.

14. Procédé selon l'une quelconque des revendications de 9 à 13, dans lequel ladite partie prédéfinie du véhicule est une partie de la carrosserie du véhicule et/ou une cible prédéfinie appliquée au véhicule.

15. Système d'évaluation diagnostique d'un véhicule (2) équipé d'au moins quatre roues (3) comportant des pneus (4) couplés aux jantes (5) respectives, comprenant au moins un appareil de service de roue conçu pour calculer un paramètre non idéal d'une roue (3), **caractérisé en ce qu'**il comprend un appareil (1) selon l'une quelconque des revendications de 1 à 8, dans lequel l'unité de traitement (18) est programmée pour déduire des indications diagnostiques concernant le réglage du véhicule (2) en fonction d'une déviation de ladite trajectoire réelle par rapport à ladite trajectoire idéale et du paramètre non idéal calculé par l'appareil de service de roue pour les roues (3) du véhicule (2).
